# EUROPEAN PATENT SPECIFICATION

(11) **EP 2 414 468 B1**
(45) Date of publication and mention of the grant of the patent: **22.01.2014**
(21) Application number: 10712407.5
(22) Date of filing: 30.03.2010
(51) Int. Cl.: C09D 175/16, H01B 3/30, C08G 18/48, C08G 18/67, C08K 5/521, C08F 290/06, C08G 18/76

(54) **RADIATION CURABLE RESIN COMPOSITION FOR WIRE COATING**
STRAHLENHÄRTBARE HARZZUSAMMENSETZUNG ZUR DRAHTUMMANTELUNG
COMPOSITION DE RÉSINE DURCISSABLE AUX RAYONNEMENTS POUR REVÊTEMENT DE FILS

(30) Priority: 31.03.2009 JP 2009086315; 19.03.2010 JP 2010063762; 19.03.2010 JP 2010063760
(43) Date of publication of application: 08.02.2012
(73) Proprietor: DSM IP Assets B.V., 6411 TE Heerlen (NL); JSR Corporation, Tokyo 105-8640 (JP)
(72) Inventor: YAMAGUCHI, Hiroshi, Tokyo 105-8640 (JP); KAMO, Satoshi, Tokyo 105-8640 (JP); KUROSAWA, Takahiko, Tokyo 105-8640 (JP)
(74) Representative: Jansen, Cornelis Marinus
(86) International application number: PCT/EP2010/054173
(87) International publication number: WO 2010/112493

(56) References cited:
- EP-A1- 1 000 993
- EP-A1- 1 156 094
- WO-A1-98/36325
- WO-A1-2008/099666
- US-A- 5 928 778

## Description

The present invention relates to the use for wire coating of a radiation curable resin composition, and to a wire having a wire coating obtained by curing said radiation curable resin composition. More in particular, the invention relates to electrical wires, specifically, power wires, telephone wires, wires for connecting between electronic equipment or within electronic equipment.

Polyethylene (PE), which has superior electrical characteristics and transmission characteristics, has been used for power wires, electrical wires, telephone line cables, wires for connecting between electronic equipment or within electronic equipment, automotive wiring and the like for an insulator and PE and polyvinyl chloride (PVC) in the outer sheath. Television lead wires and the like use PE coatings or rubber in the outer sheath.

In addition, PVC, polyethylene terephthalate (PET), cross-linked PE and the like are widely used for automotive wiring coatings (see: Japanese Published Unexamined Patent Application No. 2001-312925, Japanese Published Unexamined Patent Application No. 2005-187595, Japanese Published Unexamined Patent Application No. 2006-348137 and Japanese Published Unexamined Patent Application No. 2007-45952). In addition, examples of using radiation curable resins for wire coatings have been disclosed (see Japanese Published Unexamined Patent Application No. 2008-251435).

However, there are cases in conventional wire coating materials where the manufacturing efficiency for the coating layer and the adhesion with the center conductor are insufficient even though there is a strong requirement for strength as a protective material. It would be desirable to provide a resin composition for wire coatings that has excellent adhesion with the center conductor as well as having good manufacturing efficiency for the coating layer and sufficient strength, specifically a high value for total elongation.

Thus, the present inventors focused on urethane (meth)acrylate based radiation curable resin compositions to develop wire coating materials to replace conventional PVC and PE. As a result of various investigations, they have discovered that a wire coating material with good adherence with the center conductor may be obtained even though the manufacturing efficiency of the coating layer is good and there is sufficient strength if a combination of urethane (meth)acrylate with a specific structure, a compound having a cyclic structure and one ethylenically unsaturated group and a specific compound having a phosphoric acid ester structure is used and have completed the present invention.

In other words, the present invention uses a radiation curable resin composition for wire coating that includes the following ingredients (A), (B) and (D):
(A) a urethane (meth)acrylate having two or more structural parts derived from an aliphatic polyol,
(B) a compound having a cyclic structure and one ethylenically unsaturated group,
(D) a compound given by the following formula (4a) 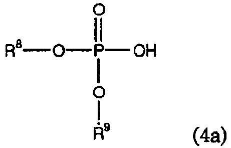
wherein, R⁸ is a monovalent organic group having an ethylenically unsaturated group, and R⁹ is a hydrogen atom or a monovalent organic group that may have an ethylenically unsaturated group.

In the present invention, the wire coating layer (may also simply be called coating layer) is a resin coating layer used on the wire. If it is a resin coating layer provided on the outside of a center conductor formed by a metal wire such as copper or aluminum, it is not limited in particular. It typically includes an insulating layer for an insulated wire having an insulating layer that covers the center conductor, a sheath layer for a cable that covers a single or a plurality of insulated wires with a sheath layer, a sheath layer provided on the outside of a shield layer of a cable having a shield layer. In addition, the wire coating material is a resin composition used in manufacturing the wire coating layer.

If the composition as described herein is used, a wire coating layer with superior strength (specifically, strength shown by total elongation) and heat resistance may be formed simply and uniformly by exposure to radiation such as ultra violet radiation. The adherence of this protective layer to the center conductor is excellent, and the wire coating layer may be manufactured efficiently. Since a wire having sufficient strength even with a thin coating layer may be obtained by using the radiation curable wire coating material as described herein, it is particularly suitable for use in power wires, for example motor coils and other power wiring.

In the following, the various ingredients constituting the composition used in the present invention will be described.

The urethane (meth)acrylate, which is ingredient (A) of the composition, is a urethane (meth)acrylate having two or more structural parts derived from an aliphatic polyol. Ingredient (A) preferably has the structure given by the following formula (a).

HA-(DI-aPOL-)ₘ-DI-HA (α)

wherein, aPOL is a structural part derived from an aliphatic polyol, DI a structure derived from diisocyanate, and HA a structure derived from (meth)acrylate containing a hydroxyl group, m is 2 or more, and preferably 2 to 3.

Since the urethane (meth)acrylate of ingredient (A) has two or more structural parts derived from a polyol, the distance (distance between cross-linked points) from cross-linked point to cross-linked point is increased during curing because the distance between (meth)acrylate groups that are terminal on both urethane (meth)acrylate molecules is greater than urethane (meth)acrylate having one structural part derived from a polyol with the same molecular weight. A wire coating layer with superior resistance to outside stresses with a large total elongation may be formed. In addition, since the number of urethane bonds in the molecule is greater for ingredient (A) than a urethane (meth)acrylate having one partial structure derived from a polyol that has twice the molecular weight of the polyol used in ingredient (A), the density of the hydrogen bonds formed in the cured material may be increased. A wire coating layer with excellent adhesion to the center conductor may be formed in addition to being able to form a wire coating layer that has a large value for total elongation, is superior in resistance to outside stress and has superior heat resistance.

The urethane (meth)acrylate that is ingredient (A) may be obtained by reacting (a) an aliphatic polyol, (b) polyisocyanate and (c) (meth)acrylate containing a hydroxyl group.

The aliphatic polyol (a) has an aliphatic structure, and as long as it has an aliphatic structure, it is not limited specifically to an aliphatic diol, examples include polyethylene glycol, polypropylene glycol, polytetramethylene glycol, polyhexamethylene glycol or aliphatic polyether polyols obtained by ring-opening copolymerization of two or more ion polymerizable cyclic compounds. Examples of the ion polymerizable cyclic compounds above include ethylene oxide, propylene oxide, butene-1-oxide, isobutene oxide, tetrahydrofuran, 2-methyltetrahydrofuran, 3-methyltetrahydrofuran. Examples of specific combinations of the two or more ion polymerizable cyclic compounds above include tetrahydrofuran and propylene oxide, tetrahydrofuran and 2-methyltetrahydrofuran, tetrahydrofuran and 3-methyltetrahydrofuran, tetrahydrofuran and ethylene oxide, propylene oxide and ethylene oxide, butene-1-oxide and ethylene oxide, a terpolymer of tetrahydrofuran, butene-1-oxide and ethylene oxide. Among these, polypropylene glycol and polytetramethylene glycol are preferable.

The preferable molecular weight for the aliphatic polyol (a) is 500 to 1000 g/mol as the polystyrene average molecular weight found by gel permeation chromatography and more preferably 500 to 800 g/mol. A preferable range for the mechanical characteristics, particularly the total elongation, of the wire coating layer may be created by being within the range of molecular weight for the polyol (a) above. If the molecular weight of the aliphatic polyol (a) is less than 500, the distance between cross-linked points in the cured material is reduced as a result of a reduction in the molecular weight of ingredient (A), and the total elongation tends to be reduced. In addition, if the molecular weight of the aliphatic polyol (a) exceeds 1000 g/mol, the distance between cross-linked points becomes too large as a result of the molecular weight of ingredient (A) being too large, and the Young's modulus tends to become too small.

Examples of commercial products for the aliphatic polyol (a) include PTMG650, PTMG1000, PTMG2000 (the preceding manufactured by Mitsubishi Chemical Corp.), PPG-400, PPG1000, PPG2000, PPG3000, PPG4000, EXCENOL720, 1020, 2020 (the preceding manufactured by Asahi Glass Urethane), PEG1000, Unisafe DC1100, DC1800 (the preceding manufactured by NOF Corporation), PPTG2000, PPTG1000, PTG400, PTGL2000 (the preceding manufactured by Hodogaya Chemical Co., Ltd.), Z-3001-4, Z-3001-5, PBG2000A, PBG2000B (the preceding manufactured by Dai-ichi Kogyo Seiyaku Co., Ltd.). A product with a suitable molecular weight may be selected and used from among these commercial products according to the type of urethane (meth)acrylate targeted in the synthesis.

Examples of the polyisocyanate (b), specifically for a diisocyanate, include 2,4-trilene diisocyanate, 2,6-trilene diisocyanate 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylene-bis(4-cyclohexylisocyanate), 2,2,4-trimethylhexamethylene diisocyanate, bis(2-isocyanatoethyl)fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylene diisocyanate, 2,5-bis(isocyanatomethyl)-bicyclo[2.2.1] heptane, 2,6-bis(isocyanatomethyl)-bicyclo[2.2.1]heptane. In particular, 2,4-tolylene diisocyanate, isophorone diisocyanate, xylylene diisocyanate, methylene-bis(4-Cyclohexylisocyanate) are preferable. These polyisocyanates may be used individually or in a combination of two or more.

Examples of the (meth)acrylate containing a hydroxyl group (c) include 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butane polyol mono(meth)acrylate, 2-hydroxyalkyl(meth)acryloyl phosphate, 4-hydroxycyclohexyl (meth)acrylate, 1,6-hexane polyol mono(meth)acrylate, neopentyl glycol mono(meth)acrylate, trimethylolpropane di(meth)acrylate, trimethylolethane di(meth)acrylate, pentaerythritol tri(meth)acrylate, dipentaerythritol penta(meth)acrylate. In addition, compounds obtained through addition reactions of alkyl glycidyl ethers, allyl glycidyl ethers, glycidyl (meth)acrylate and other compounds containing a glycidyl group and a (meth)acrylate may be used. Of these (meth)acrylates containing a hydroxyl group, 2-hydroxyethyl (meth)acrylate, 2-hydroxypropyl (meth)acrylate, in particular, are preferable. These (meth)acrylate compounds containing a hydroxyl group may be used individually or in a combination of two or more.

In the synthesis reaction for these urethane (meth)acrylates that are ingredient (A), it is preferable to use 0.01 to 1 parts by mass of a urethane catalyst, such as copper naphthenate, cobalt naphthenate, zinc naphthenate, dibutyl tin dilaurate, triethyl amine, 1,4-diazabicyclo[2.2.2]octane, 2,6,7-trimethyl-1,4-diazabicyclo[2.2.2]octane, to 100 parts by mass of the total amount of the reactants. In addition, the reaction temperature is normally 10 to 90 °C, and reacting at 30 to 80 °C is particularly preferable.

The urethane (meth)acrylate having two or more partial structures derived from a polyol having an aliphatic structure (A) is synthesized by adjusting the amounts of the aliphatic polyol (a), polyisocyanate (b) and (meth)acrylate containing a hydroxyl group used according to the theoretical molar ratio required by the structure of the desired urethane (meth)acrylate (A).

For example, when the urethane acrylate has the structure given by the following formula (a), it is preferable to set the molar ratio for the aliphatic polyol (a) : polyisocyanate (b) : (meth) acrylate containing a hydroxyl group to M : m + 1 : 2 and carry out the reaction.

HA-(DI-aPOL-)ₘ-DI-HA (a)

The order of addition for the various raw materials when synthesizing the urethane (meth)acrylate (A) is not limited in particular, but it is preferable to add the (meth)acrylate containing a hydroxyl group (c) after adding the aliphatic polyol (a) and the polyisocyanate (b). Adding the various raw materials in this order makes it more difficult for oligomers where the polyols and polyisocyanates are bonded alternately to form than when the polyisocyanates and (meth)acrylates containing a hydroxyl group are added at the beginning and makes it easier to obtain the targeted ingredient (A).

The urethane (meth)acrylate that is ingredient (A) is normally mixed in at 30 to 80 % by mass of the total 100 % by mass of the composition from the standpoint of mechanical strength and coating properties of the wire coating layer, and a mixture of 40 to 70 % by mass is preferable.

The compound having a cyclic structure and one ethylenically unsaturated group that is ingredient (B) is a polymerizable monofunctional compound having a cyclic structure. The mechanical characteristics of the wire coating layer obtained using the composition as described herein are adjusted by using this compound for ingredient (B), and both adherence to the center conductor and mechanical strength may be established. Examples of the cyclic structure are an alicyclic structure, heterocyclic structure containing a nitrogen atom or oxygen atom, aromatic ring, and of these and alicyclic structure is particularly preferable.

Examples of the compound having a cyclic structure and one ethylenically unsaturated group (B) are (meth)acrylates having an alicyclic structure such as isobornyl (meth)acrylate, bornyl (meth)acrylate, tricyclodecanyl (meth)acrylate, and dicyclopentanyl (meth)acrylate; benzyl (meth)acrylate, 4-butylcyclohexyl (meth)acrylate, acryloylmorpholine, vinylimidazole, vinylpyridine. Furthermore, there are the compounds given by the following formulas (1) through (3). 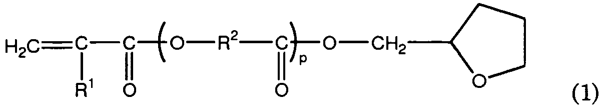 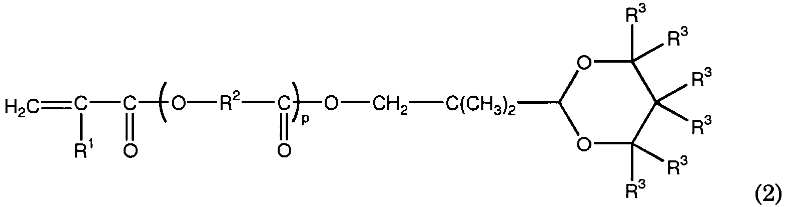 wherein, R¹ is a hydrogen atom or a methyl group, R² an alkylene group with 2 to 8 carbon atoms preferably 2 to 5, R³ a hydrogen atom or a methyl group and p is a number, preferably from 1 to 4. 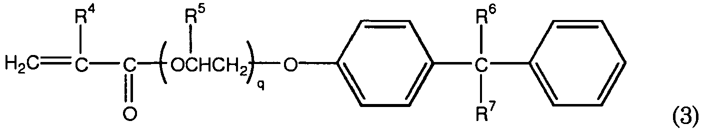 wherein, R⁴, R⁵, R⁶ and R⁷ are independent from each other and are a hydrogen atom or methyl group, and q is a number from 1 to 5.

Of these polymerizable monofunctional compounds (B), compounds having cyclic structures are preferable, and among them isobornyl (meth)acrylate and other compounds having cross-linked cyclic structures are preferable. Ingredients (B) having cyclic structures have a rigid structure; therefore, they may prevent the Young's modulus of the cured material from being too small because ingredient (A) has a flexible structure and may make for a balance in the Young's modulus suitable for the wire coating layer and the physical properties of rupture strength and total elongation.

IBXA (manufactured by Osaka Organic Chemical Industry Co., Ltd.), Aronix M-111, M-113, M-114, M-117 and TO-1210 (the preceding manufactured by Toagosei Co., Ltd.) may be used as commercially available products for these polymerizable monofunctional compounds (B).

These monofunctional compounds having a cyclic structure that are ingredient (B) are mixed in at 15 to 60 % by mass of the total 100 % by mass of the composition from the standpoint of the strength of the wire coating and adherence to the center conductor, and 25 to 50 % by mass is more preferable, with 30 to 50 % by mass being particularly preferable. However, it is preferable for N-vinylpyrrolidone and N-vinylcaprolactam, (meth)acrylates and other lactams containing vinyl to be mixed in at 5 % by mass or less of the total composition even if they are ingredient (B), more preferably 2 % by mass and most preferably not at all because they may reduce the storage stability of the composition if they coexist with ingredient (D), which will be described hereinafter. In addition, it is preferable for ingredient (B) to contain isobornyl (meth)acrylate and the amount of the isobornyl (meth)acrylate in the mixture is more preferably 50 % by mass of the total 100 % by mass of ingredient (B). A cured material with superior mechanical strength may be obtained by using isobornyl (meth)acrylate.

A compound having two or more ethylenically unsaturated groups (C) may be mixed into the composition used in the present invention to the extent that it does not inhibit the effects of the invention. The compound having two or more ethylenically unsaturated groups (C) is a polymerizable polyfunctional compound. Examples of the polymerizable polyfunctional compound (C) include trimethylolpropane tri(meth)acrylate, trimethylolpropane trioxyethyl (meth)acrylate, pentaerythritol tri(meth)acrylate, triethylene glycol diacrylate, tetraethylene glycol di(meth)acrylate, tricyclodecanediyldimethanol diacrylate, 1,4-butane polyol di(meth)acrylate, 1,6-hexane polyol di(meth)acrylate, neopentyl glycol di(meth)acrylate, tripropylene glycol di(meth)acrylate, neopentyl glycol di(meth)acrylate, both terminal (meth)acrylic acid adducts of bisphenol A diglycidyl ether, pentaerythritol tri(meth)acrylate, pentaerythritol tetra(meth)acrylate, polyester di(meth)acrylate, tris(2-hydroxyethyl)isocyanurate tri(meth)acrylate, tris(2-hydroxyethyl)isocyanurate di(meth)acrylate, tricyclodecane dimethanol di(meth)acrylate, di(meth)acrylate of ethylene oxide or propylene oxide adduct polyol of bisphenol A, di(meth)acrylate of ethylene oxide or propylene oxide addition polyol of hydrogenated bisphenol A, epoxy(meth)acrylate where (meth)acrylate is added to diglycidyl ether of bisphenol A, triethylene glycol divinyl ether.

These compounds having two or more ethylenically unsaturated groups (C) may been mixed in at 0 to 5 % by mass of the total 100 % by mass of the composition, but more preferably at 0 to 2 % by mass and most preferably not mixed in at all. If the mixture exceeds 5 % by mass, the wire coating layer may be excessively rigid and the mechanical strength, and adherence to the center conductor may be lost.

Ingredient (D) used in the composition as described herein is a compound having the structure given by the following formula (4a). The adherence to the center conductor is improved by mixing in ingredient (D). It is presumed that the adherence is improved by the hydroxyl group that bonds to the phosphorus atom in ingredient (D) coordinating to a metal atom that forms the center conductor, and the ethylenically unsaturated group bonding to the resin matrix. Therefore, with a compound where all of the hydroxyl groups that phosphoric acid has are esterified, it is not effective for improving adherence because there are no hydroxyl groups. In addition, when a carboxylic acid ester is used in place of the phosphoric acid ester of ingredient (D), the adherence improvement effect is too small. 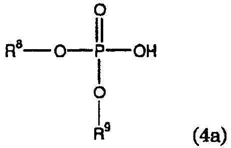 wherein, R⁸ is a monovalent organic group having an ethylenically unsaturated group, and R⁹ is a hydrogen atom or a monovalent organic group that may have an ethylenically unsaturated group.

Ingredient (D) is preferably a compound given by the following formula (4). 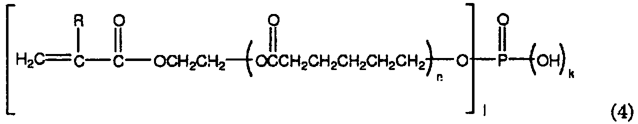 wherein, R is a hydrogen atom or methyl group, and n is 0 to 1, j is 1 to 2, and k is 3 - j.

Commercial products for the compound given an formula (4) above include KAYAMER PM-2 and PM21 (manufactured by Nippon Kayaku Co., Ltd.).

The mixing amount for ingredient (D) is 0.01 to 1 % by mass of the total 100 % by mass of the composition from the standpoint of adherence to the center conductor and strength of the wire coating layer, more preferably 0.05 to 0.5 % by weight.

A silicone compound (E) may be further mixed into the composition used in the present invention from the standpoint of adherence to the center conductor and weather resistance of the wire coating layer. Examples of the silicone compound include polyether-modified silicone, alkyl-modified silicone, urethane acrylate-modified silicone, urethane-modified silicone, methylstyryl-modified silicone, epoxy polyether-modified silicone, alkylaralkyl polyether-modified silicone.

Furthermore, a polymerization initiator (F) may be mixed into the composition of the present invention. The polymerization initiator (F) is preferably a photoinitiator. Here, examples of the photopolymerization initiator include 1-hydroxy cyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2-methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morphono-propan-1-one, 2,4,6-trimethylbenzoyl diphenylphosphine oxide, bis-(2,6-dimethoxybenzoyl)-2,4,4-trimethylpentylphosphine oxide; IRGACURE 184, 369, 651, 500, 907, CGI 1700, CGÏ 1750, CGI 1850, CG24-61; Darocur 1116 and 1173 (the preceding manufactured by Ciba Specialty Chemicals Co.); Lucirin TPO (manufactured by BASF); Ubecryl P36 (manufactured by UCB). In addition, examples of photosensitizers include triethylamine, diethylamine, N-methyldiethanole amine, ethanolamine, 4-dimethylaminobenzoic acid, methyl 4-dimethylaminobenzoate, ethyl 4-dimethylaminobenzoate, isoamyl 4-dimethylaminobenzoate; Ubecryl P102, 103, 104 and 105 (manufactured by UCB).

The polymerization initiator (F) is mixed in at 0.1 to 10 % by mass of the total 100 % by mass of the composition, and 0.3 to 7 % by mass is particularly preferable.

Various types of additives such as antioxidants, coloring agents, ultraviolet absorbers, light stabilizers, agents for preventing thermal polymerization, leveling agents, surfactants, storage stabilizers, plasticizers, lubricants, solvents, fillers, aging preventives, wettability improvers, and coating surface improvers may be added to the composition used in the present invention.

Moreover the composition used in the present invention is cured by radiation, but that may be infrared radiation, visible light radiation, ultraviolet radiation, X-rays, electron beams, alpha rays, beta rays, gamma rays while the like, and it is typically ultraviolet radiation.

The viscosity of the composition used in the present invention is 0.5 to 10 Pa·s at 25 °C, and more preferably 1 to 5 Pa·s. Application of the wire coating material when the wire is manufactured is made easy because the viscosity is within this range, and the manufacturing efficiency for the wire is improved.

The Young's modulus of the wire coating layer obtained by curing the composition as described herein varies according to the type of wire coating layer, but for the insulating layer of a coated wire, it is preferably 70 to 1000 MPa, more preferably 80 to 800 MPa, and particularly preferably 90 to 500 MPa. A wire coating layer that has durability for outside stress may be obtained by having the Young's modulus within this range.

The rupture strength and total elongation of the wire coating layer obtained by curing the composition as described herein varies according to the type of wire coating layer, but for the insulating layer of a coated wire, it is preferably 20 to 60 MPa, and more preferably 30 to 50 MPa. A total elongation of 110 to 250 % is preferable, and more preferably it is 140 to 200 %. A wire with high durability for outside stress, such as durability when the coated wire is bent, may be obtained by having the rupture strength and total elongation within these ranges.

The composition used in the present invention is useful as a radiation curable resin composition for wire coating of electric wires, specifically power wires, telephone wires, automotive wiring. If the composition used in the present invention is applied and exposed to radiation, a wire coating layer that is uniform with superior strength (specifically, strength shown by the total elongation) may be formed. In addition, the wire coating layer formed by the present invention has superior strength and the adherence to the center conductor is excellent; therefore, the workability for wiring is excellent.

Next, the present invention will be described in detail through examples, but the present invention is not limited in any way to these examples.

### Examples

### Preparation Example 1:

### Synthesis of urethane (meth)acrylate of ingredient (A)

0.24 g of 2,6-di-t-butyl-p-cresol, 242.2 g of 2,4-trilene diisocyanate and 649.1 g of polypropylene glycol with a number average molecular weight of 700 g/mol were added to a reaction vessel provided with a stirrer and cooled until the liquid temperature was 15 °C. After adding 0.80 g of dibutyltin dilaurate, it was stirred for one hour such that the temperature did not rise above 40 °C. Thereafter, the temperature was increased to 65 °C, and it was stirred for another hour. After this was cooled by ice until the temperature was 15 °C or less while stirring, 107.7 g of hydroxyethyl acrylate was dripped in while controlling the temperature at 20 °C or below. Thereafter, it was stirred for another hour and reacted. Stirring was continued for three hours at a liquid temperature of 70 to 75 °C, and when the residual isocyanate was 0.1 % by mass or less, the reaction was ended. The urethane (meth)acrylate (A) obtained was called UA-1. UA-1 has an average of two structural parts derived from polypropylene glycol having a number average molecular weight of 700 g/mol.

### Preparation Example 2:

### Synthesis of urethane (meth)acrylate of ingredient (A)

0.024 g of 2,6-di-t-butyl-*p*-cresol, 25.40 g of 2,4-trilene diisocyanate and 63.23 g of polytetraethylene glycol with a number average molecular weight of 650 g/mol were added to a reaction vessel provided with a stirrer and cooled until the liquid temperature was 15 °C. After adding 0.08 g of dibutyltin dilaurate, it was stirred for one hour such that the temperature did not rise above 40 °C. Thereafter, the temperature was increased to 65 °C, and it was stirred for another hour. After this was cooled by ice until the temperature was 15 °C or less while stirring, 11.29 g of hydroxyethyl acrylate was dripped in while controlling the temperature at 20 °C or below. Thereafter, it was stirred for another hour and reacted. Stirring was continued for three hours at a liquid temperature of 70 to 75 °C, and when the residual isocyanate was 0.1 % by mass or less, the reaction was ended. The urethane (meth)acrylate (A) obtained was called UA-2. UA-2 has an average of two structural parts derived from polytetraethylene glycol with a number average molecular weight of 650 g/mol.

### Comparative preparation example 1:

### Synthesis of urethane (meth)acrylate not corresponding to ingredient (A)

0.24 g of 2,6-di-t-butyl-p-cresol, 271.7 g of 2,4-trilene diisocyanate and 546.1 g of polypropylene glycol with a number average molecular weight of 700 g/mol were added to a reaction vessel provided with a stirrer and cooled until the liquid temperature was 15 °C. After adding 0.80 g of dibutyltin dilaurate, it was stirred for one hour such that the temperature did not rise above 40 °C.This was cooled to a temperature of 15 °C or less while stirring. Thereafter, 181.17 g of hydroxyethyl acrylate was dripped in while controlling the temperature at 20 °C or below. Thereafter, it was stirred for another hour and reacted. Stirring was continued for three hours at a liquid temperature of 70 to 75 °C, and when the residual isocyanate was 0.1 % by mass or less, the reaction was ended. The urethane (meth)acrylate (A) obtained was called UA-3. UA-3 has an average of one structural part derived from polypropylene glycol having a number average molecular weight of 700 g/mol.

### Comparative preparation example 2:

### Synthesis of urethane (meth)acrylate not corresponding to ingredient (A)

0.024 g of 2,6-di-t-butyl-p-cresol, 13.48 g of 2,4-trilene diisocyanate and 77.44 g of polypropylene glycol with a number average molecular weight of 2000 g/mol were added to a reaction vessel provided with a stirrer and cooled until the liquid temperature was 15 °C. After adding 0.08 g of dibutyltin dilaurate, it was stirred for one hour such that the temperature did not rise above 40 °C. Thereafter, the temperature was increased to 65 °C, and it was stirred for another hour. This was cooled to a temperature of 15 °C or less while stirring. Thereafter, 8.99 g of hydroxyethyl acrylate was dripped in while controlling the temperature at 20 °C or below. Thereafter, it was stirred for another hour and reacted. Stirring was continued for three hours at a liquid temperature of 70 to 75 °C, and when the residual isocyanate was 0.1 % by mass or less, the reaction was ended. The urethane (meth)acrylate (A) obtained was called UA-4. UA-4 has an average of one structural part derived from polypropylene glycol having a number average molecular weight of 2000 g/mol.

### Comparative preparation example 3:

### Synthesis of urethane (meth)acrylate not corresponding to ingredient (A)

0.024 g of 2,6-di-*t*-butyl-p-cresol, 35.49 g of 2,4-trilene diisocyanate and 40.75 g of ethylene oxide adduct diol of bisphenol A with a number average molecular weight of 400 g/mol were added to a reaction vessel provided with a stirrer and cooled until the liquid temperature was 15 °C. After adding 0.080 g of dibutyltin dilaurate, it was stirred for one hour such that the temperature did not rise above 40 °C. Thereafter, the temperature was increased to 65 °C, and it was stirred for another hour. This was cooled to a temperature of 15 °C or less while stirring. Thereafter, 23.66 g of hydroxyethyl acrylate was dripped in while controlling the temperature at 20 °C or below. Thereafter, it was stirred for another hour and reacted. Stirring was continued for three hours at a liquid temperature of 70 to 75 °C, and when the residual isocyanate was 0.1 % by mass or less, the reaction was ended. The urethane (meth)acrylate (A) obtained was called UA-5. UA-5 has an average of one structural part derived from the ethylene oxide adduct diol of bisphenol A with a number average molecular weight of 400 g/mol.

### Examples 1 - 3 and Comparative Examples 1 - 6

Ingredients with the compositions shown in Table 1 were put into a reaction vessel equipped with a stirrer, stirred for one hour while controlling the liquid temperature at 50 °C and liquid curable resin compositions were obtained.

### Test Example

The curable liquid resin compositions obtained in the above examples and comparative examples were cured using the following method and test samples were prepared. The various evaluations described below were carried out. The results are also shown in Table 1.

### 1. Young's modulus:

The curable liquid resin composition was applied to a glass plate using an applicator bar with a thickness of 250 µm. This was cured by exposure to ultraviolet rays with an energy of 1 J/cm² in air, and a film for measuring the Young's modulus were obtained. Strip samples were cut from this film to have drawing part with a width of 6 mm and a length of 25 mm, and tension tests were carried out at a temperature of 23 °C and 50 % humidity. The elastic stress rate was 1 mm/min and the Young's modulus was found from the tensile strength with a 2.5 % deformation.

### 2. Rupture strength and total elongation:

The rupture strength and total elongation of the samples were measured at the following measurement conditions using a tensile tester (Shimadzu Corp., AGS-50G).
Elastic stress rate: 50 mm/min
Gauge length (measurement distance): 25 mm
Measurement temperature: 23 °C
Relative humidity: 50 % RH

### 3. Glass transition temperature (Tg):

The resin liquid was applied to a glass plate using an applicator sewed that it was 200 µm thick, cured with irradiance of 1.0 J/cm² and a cured film obtained. This film was cut into 3 mm × 35 mm samples, and dynamic viscoelasticity was measured with an Orientec Co., Ltd. Rheovibron DDV-01FP. The temperature exhibiting the maximum value for the loss tangent (tan δ) for a vibration frequency of 3.5 Hz was defined as the glass transition temperature, and glass transition temperatures were evaluated.

### 4. Adhesion to copper and aluminum:

The adhesive strength of cured materials of the compositions obtained in the examples and comparative examples was measured.

The liquid composition was applied to a copper plate using an applicator with a thickness of 190 µm, exposed to 0.5 J/cm² ultraviolet radiation in a nitrogen atmosphere and a cured film with a thickness of 130 µm was obtained. This sample was left at rest for 24 hours at a temperature of 23 °C and 50 % humidity.

Thereafter, strip samples with a width of 10 mm were created on the copper plate from this cured film.

Adhesive strength tests were carried out on the samples according to JIS Z0237 using a tensile tester. The adhesive strength with the metal was found from the tensile strength at an elastic stress rate of 50 mm/min. In addition, the adhesive strength in the case where the copper plate was replaced by an aluminum plate was evaluated in the same manner.

**Table 1**

| **Ingredient (% by mass)** | | **Example 1** | **Example 2** | **Example 3** | **Comparative Example 1** | **Comparative Example 2** | **Comparative Example 3** | **Comparative Example 4** | **Comparative Example 5** | **Comparative Example 6** |
|---|---|---|---|---|---|---|---|---|---|---|
| (A) | UA-1 | 50.8 | | 50.8 | | | | 50.8 | 50.8 | 50.8 |
| | UA-2 | | 50.8 | | | | | | | |
| Not (A) | UA-3 | | | | 62.0 | | | | | |
| | UA-4 | | | | | 50.8 | | | | |
| | UA-5 | | | | | | 50.8 | | | |
| (B) | Isobornyl acrylate | 31.0 | 31.0 | 45.4 | 20.0 | 31.0 | 31.0 | | 31.2 | 31.0 |
| | Acryloylmorpholine | 14.4 | 14.4 | | 14.6 | 14.4 | 14.4 | | 14.4 | 14.4 |
| (not B) | 2-ethylhexyl acrylate | | | | | | | 45.4 | | |
| (C) | Lucirin TPO | 1.0 | 1.0 | 1.0 | 0.9 | 1.0 | 1.0 | 1.0 | 1.0 | 1.0 |
| | Irgacure 184 | 2.1 | 2.1 | 2.1 | 2.0 | 2.1 | 2.1 | 2.1 | 2.1 | 2.1 |
| (D) | PM-21 | 0.2 | 0.2 | 0.2 | 0.2 | 0.2 | 0.2 | 0.2 | | |
| (not D) | Acrylic acid | | | | | | | | | 0.2 |
| | Igranox 254 | 0.5 | 0.5 | 0.5 | 0.3 | 0.5 | 0.5 | 0.5 | 0.5 | 0.5 |
| | Total | 100 | 100 | 100 | 100 | 100 | 100 | 100 | 100 | 100 |

| | | **Example 1** | **Example 2** | **Example 3** | **Comparative Example 1** | **Comparative Example 2** | **Comparative Example 3** | **Comparative Example 4** | **Comparative Example 5** | **Comparative Example 6** |
|---|---|---|---|---|---|---|---|---|---|---|
| Young's modulus (MPa) | | 120 | 166 | 102 | 150 | 57 | 266 | 9 | 140 | 117 |
| Rupture strength (MPa) | | 34 | 38 | 31 | 33 | 21 | 35 | 8 | 36 | 36 |
| Total elongation (%) | | 160 | 161 | 157 | 100 | 173 | 60 | 147 | 160 | 152 |
| Tg (@3.5Hz) | | 60 | 62 | 56 | 60 | 52 | 65 | 31 | 63 | 62 |
| Aluminum adhesive strength (N/m) | | 40 | 42 | 43 | 30 | 27 | 22 | 41 | 7 | 8 |
| Copper adhesive strength (N/m) | | 160 | 151 | 160 | 130 | 132 | 99 | 163 | 11 | 10 |

In Table 1:
Isobornyl acrylate: IBXA (manufactured by Osaka Organic Chemical Industry Co., Ltd.)
Acryloylmorpholine: ACMO (manufactured by Kohjin Co., Ltd.)
Lucirin TPO: 2,4,6-trimethylbenzoyl diphenylphosphine oxide (manufactured by BASF Japan)
Irgacure 184: 1-hydroxy cyclohexyl phenyl ketone (manufactured by Ciba Specialty Chemicals Co., Ltd.)
Irganox 254: triethylene glycol
bis- [3-(3-*t*-butyl-4-hydroxy-5-methylphenyl)propionate] (manufactured by Ciba Specialty Chemicals Co., Ltd.)
PM-21: compound where, in previous formula (4), R = methyl group, n = 1, j = 2 and k = 1 (KAYAMER PM-21, manufactured by Nippon Kayaku Co., Ltd.)

As is clear from Table 1, the cured material formed from the resin composition used in present invention containing ingredients (A), (B) and (D) has excellent characteristics for wire coating material, and the adhesion to the center conductor is excellent, so it is useful as a composition for wire coatings. With Comparative Example 1 containing a urethane acrylate that does not correspond to ingredient (A) in place of ingredient (A), UA-3 has one structural part derived from an aliphatic polyol. Therefore, the Young's modulus has a value higher than the various examples, but the total elongation is reduced. Likewise, with Comparative Example 2 which does not contain ingredient (A), UA-4 has one structural part derived from an aliphatic polyol with a molecular weight of 2000 g/mol. Therefore, the molecular weight of the urethane acrylate is similar to the various examples and the Young's modulus is reduced. Likewise, with Comparative Example 3, which does not contain ingredient (A), UA-5 has a structural part derived from a polyol having a rigid cyclic structure. Therefore, the value of the Young's modulus increases, but the total elongation is reduced. The Young's modulus was reduced with Comparative Example 4, which mixed in 2-ethylhexyl acrylate, which does not correspond to ingredient (B) and instead of ingredient (B), and the rupture strength is reduced. Comparative Example 5, which did not contain ingredient (D), has a reduction in adhesive strength for the aluminum plate and copper plate. In Comparative Example 6, which mixed in acrylic acid in place of ingredient (D), the adhesive strength for the aluminum plate and the copper plate was also low, and it was confirmed that acrylic acid cannot replace ingredient (D).

## Claims

1. Use for wire coating of a radiation curable resin composition comprising the following ingredients (A), (B) and (D):
(A) a urethane (meth)acrylate having two or more structural parts derived from an aliphatic polyol
(B) a compound having a cyclic structure and one ethylenically unsaturated group,
(D) a compound given by the following formula (4a) 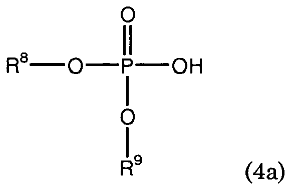
wherein, R⁸ is a monovalent organic group having an ethylenically unsaturated group, and R⁹ is a hydrogen atom or a monovalent organic group that may have an ethylenically unsaturated group.

2. Use for wire coating of a radiation curable resin composition according to claim 1 wherein said ingredient (A) is a urethane (meth)acrylate having two or more structural parts derived from an aliphatic polyol with a polystyrene average molecular weight found by gel permeation chromatography of 500 to 1000 g/mol, preferably 500 to 800 g/mol.

3. Use for wire coating of a radiation curable resin composition according to claim 1 or 2 wherein ingredient (B) contains isobornyl (meth)acrylate and the content thereof is 50 % by mass of the ingredient (B).

4. Use for wire coating of a radiation curable resin composition according to any of claims 1 through 3 wherein ingredient (D) is a compound given by the following formula (4) 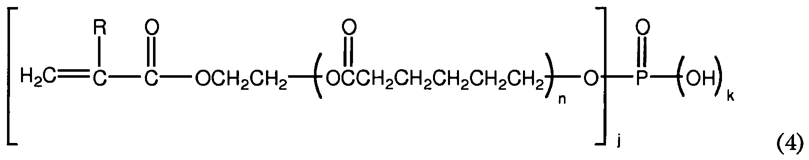 wherein, R is a hydrogen atom or methyl group, and n is 0 to 1, j is 1 to 2, and k is 3 - j.

5. Use for wire coating of a radiation curable resin composition according to any of claims 1 through 4 wherein the content for a lactam compound containing an N-vinyl group is 5 % by mass or less of the total composition.

6. Use for wire coating of a radiation curable resin composition according to any of claims 1 through 5 wherein the content for a compound having two or more ethylenically unsaturated groups (C) is 5 % by mass or less of the total composition.

7. Use for wire coating of a radiation curable resin composition according to any of claims 1 through 6 used for an insulating layer of an insulated wire.

8. A wire having a wire coating layer obtained by curing the radiation curable resin composition as defined in any one of claims 1 through 7.

9. A wire according to claim 8, wherein the wire coating layer is an insulating layer and has a Young's modulus of 70-1000 MPa, preferably 80-800 MPa, more preferably 90-500 MPa.

10. A wire according to claim 8, wherein the wire coating layer is an insulating layer and has a rupture strength of 20-60 MPa, preferably 30-50 MPa.

11. A wire according to claim 8, wherein the wire coating layer is an insulating layer and has a total elongation of 110-250 %, preferably 140-200 %.

12. A wire according to claim 8 in the form of a power wire, or telephone wire.

13. Automotive wiring comprising a wire according to claim 8.

## Patentansprüche

1. Verwendung einer strahlenhärtbaren Harzzusammensetzung zur Drahtummantelung, umfassend folgende Inhaltsstoffe (A), (B) und (D):
(A) ein Urethan(meth)acrylat mit zwei oder mehr strukturellen Teilen, abgeleitet von einem aliphatischen Polyol,
(B) eine Verbindung mit einer zyklischen Struktur und einer ethylenisch ungesättigten Gruppe,
(D) eine Verbindung, gegeben durch folgende Formel (4a) 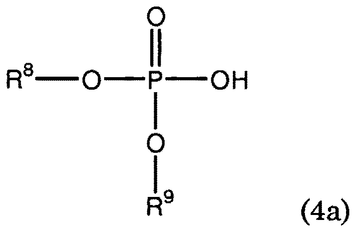
wobei R⁸ eine monovalente organische Gruppe mit einer ethylenisch ungesättigten Gruppe ist und R⁹ ein Wasserstoffatom oder eine monovalente organische Gruppe, die eine ethylenisch ungesättigte Gruppe aufweisen kann, ist.

2. Verwendung einer strahlenhärtbaren Harzzusammensetzung zur Drahtummantelung nach Anspruch 1, wobei der Inhaltsstoff (A) ein Urethan(meth)acrylat mit zwei oder mehr strukturellen Teilen, abgeleitet von einem aliphatischen Polyol mit einem durch Gel-Permeations-Chromatographie ermittelten durchschnittlichen Polystyrol-Molgewicht von 500 bis 1000 g/Mol, bevorzugt 500 bis 800 g/Mol, ist.

3. Verwendung einer strahlenhärtbaren Harzzusammensetzung zur Drahtummantelung nach Anspruch 1 oder 2, wobei der Inhaltsstoff (B) ein Isobornyl(meth)acrylat enthält und der Inhalt davon 50 % nach Masse des Inhaltsstoffs (B) ist.

4. Verwendung einer strahlenhärtbaren Harzzusammensetzung zur Drahtummantelung nach einem der Ansprüche 1 bis 3, wobei der Inhaltsstoff (D) eine Verbindung ist, gegeben durch folgende Formel (4) 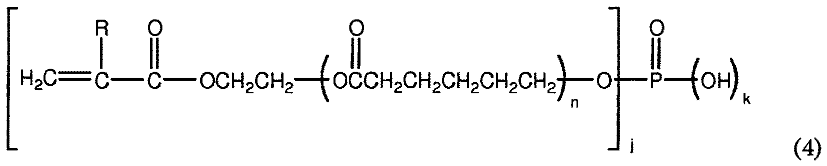 wobei R ein Wasserstoffatom oder eine Methylgruppe ist und n 0 bis 1 ist, j 1 bis 2 ist und k 3 - j ist.

5. Verwendung einer strahlenhärtbaren Harzzusammensetzung zur Drahtummantelung nach einem der Ansprüche 1 bis 4, wobei der Inhalt für eine Lactam-Verbindung enthaltend eine N-Vinylgruppe 5 % nach Masse oder weniger der Gesamtzusammensetzung ist.

6. Verwendung einer strahlenhärtbaren Harzzusammensetzung zur Drahtummantelung nach einem der Ansprüche 1 bis 5, wobei der Inhalt für eine Verbindung mit zwei oder mehr ethylenisch ungesättigten Gruppen (C) 5 % nach Masse oder weniger der Gesamtzusammensetzung ist.

7. Verwendung einer strahlenhärtbaren Harzzusammensetzung zur Drahtummantelung nach einem der Ansprüche 1 bis 6, verwendet für eine Isolierschicht eines isolierten Drahts.

8. Draht mit einer Drahtummantelungsschicht, erhalten durch Härten der strahlenhärtbaren Harzzusammensetzung wie in einem der Ansprüche 1 bis 7 definiert.

9. Draht nach Anspruch 8, wobei die Drahtummantelungsschicht eine Isolierschicht ist und einen E-Modul von 70-1000 MPa, bevorzugt 80-800 MPa, bevorzugter 90-500 MPa aufweist.

10. Draht nach Anspruch 8, wobei die Drahtummantelungsschicht eine Isolierschicht ist und eine Bruchfestigkeit von 20-60 MPa, bevorzugt 30-50 MPa, aufweist.

11. Draht nach Anspruch 8, wobei die Drahtummantelungsschicht eine Isolierschicht ist und eine Gesamtausdehnung von 110-250 %, bevorzugt 140-200 %, aufweist.

12. Draht nach Anspruch 8 in Form eines Stromdrahts oder eines Telefondrahts.

13. Automobildraht umfassend einen Draht nach Anspruch 8.

## Revendications

1. Utilisation pour le revêtement de fils d'une composition de résine durcissable par un rayonnement, comprenant les ingrédients (A), (B) et (D) suivants:
(A) un (méth)acrylate d'uréthane ayant deux ou plus de deux parties structurelles dérivant d'un polyol aliphatique,
(B) un composé ayant une structure cyclique et un seul groupe à insaturation éthylénique,
(D) un composé représenté par la formule (4a) suivante : 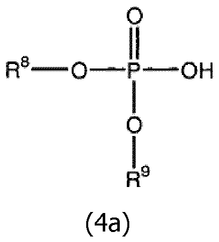 dans laquelle R⁸ est un groupe organique monovalent ayant un groupe à insaturation éthylénique, et R⁹ est un atome d'hydrogène ou un groupe organique monovalent qui peut avoir un groupe à insaturation éthylénique.

2. Utilisation pour le revêtement de fils d'une composition de résine durcissable par un rayonnement selon la revendication 1, dans laquelle ledit ingrédient (A) est un (méth)acrylate d'uréthane ayant deux ou plus de deux parties structurelles dérivant d'un polyol aliphatique et ayant une masse moléculaire moyenne rapportée au polystyrène, trouvée par chromatographie par perméation sur gel, de 500 à 1000 g/mol, de préférence de 500 à 800 g/mol.

3. Utilisation pour le revêtement de fils d'une composition de résine durcissable par un rayonnement selon la revendication 1 ou 2, dans laquelle l'ingrédient (B) contient du (méth)acrylate d'isobornyle et la teneur en celui-ci est de 50 % en masse de l'ingrédient (B).

4. Utilisation pour le revêtement de fils d'une composition de résine durcissable par un rayonnement selon l'une quelconque des revendications 1 à 3, dans laquelle l'ingrédient (D) est un composé représenté par la formule (4) suivante : 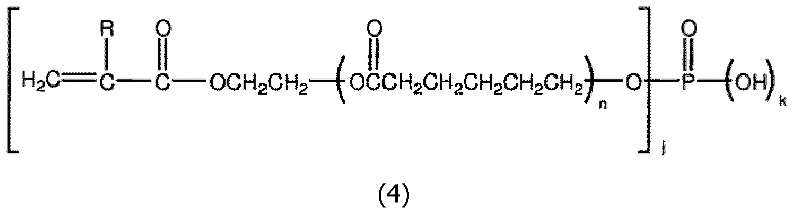 dans laquelle R est un atome d'hydrogène ou un groupe méthyle, et n vaut de 0 à 1, j vaut de 1 à 2, et k vaut 3-j.

5. Utilisation pour le revêtement de fils d'une composition de résine durcissable par un rayonnement selon l'une quelconque des revendications 1 à 4, dans laquelle la teneur en un composé de lactame contenant un groupe N-vinyle est de 5 % en masse ou moins de la composition totale.

6. Utilisation pour le revêtement de fils d'une composition de résine durcissable par un rayonnement selon l'une quelconque des revendications 1 à 5, dans laquelle la teneur en un composé ayant deux ou plus de deux groupes à insaturation éthylénique (C) est de 5 % en masse ou moins de la composition totale.

7. Utilisation pour le revêtement de fils d'une composition de résine durcissable par un rayonnement selon l'une quelconque des revendications 1 à 6, pour une couche d'isolation d'un fil isolé.

8. Fil ayant une couche de revêtement de fil obtenue par durcissement de la composition de résine durcissable par un rayonnement telle que définie dans l'une quelconque des revendications 1 à 7.

9. Fil selon la revendication 8, dans lequel la couche de revêtement de fil est une couche isolante et a un module de Young de 70 à 1000 MPa, de préférence de 80 à 800 MPa, mieux encore de 90 à 500 MPa.

10. Fil selon la revendication 8, dans lequel la couche de revêtement de fil est une couche isolante et a une résistance à la rupture de 20 à 60 MPa, de préférence de 30 à 50 MPa.

11. Fil selon la revendication 8, dans lequel la couche de revêtement de fil est une couche isolante et a un allongement total de 110 à 250 %, de préférence de 140 à 200 %.

12. Fil selon la revendication 8 sous la forme d'un fil électrique ou d'un fil de téléphone.

13. Câblage pour automobile comprenant un fil selon la revendication 8.
